# EUROPEAN PATENT APPLICATION

(11) **EP 0 813 016 A1**
(43) Date of publication of application: **17.12.1997**
(21) Application number: 97870085.4
(22) Date of filing: 12.06.1997
(51) Int. Cl.: F16L 37/00, F16L 37/12, F16L 37/20

(54) **Composition for controlling the coupling of pipes**

(30) Priority: 12.06.1996 BE 9600539
(71) Applicant: Elaflex, 2100 Antwerpen-Deurne (BE)
(72) Inventor: Van Loock, André, 2900 Schoten (BE); De Boo, Karel, 2531 Boechout (BE); Mees, Hugo, 9100 Sint Niklaas (BE)
(74) Representative: Claeys, Pierre

(57) **Abstract**

The invention relates to a composition comprising a first pipe (1), a second pipe (2) and a coupling detector (5), whereby said first (1), respectively said second (2) pipe is provided with a first (3), respectively second coupling piece (4), which coupling pieces are provided to engage each other upon coupling of said pipes, whereby said coupling detector (5) is provided for mounting onto said first pipe (1), said coupling detector further comprising a switch (10) for switching the coupling detector (5) into a position which corresponds to a coupled state of said pipes (1, 2), characterised in that upon coupling of said pipes (1, 2) said switch (10) is operable by said second coupling piece (4).

## Description

The present invention relates to a composition comprising a first pipe, a second pipe and a coupling detector, whereby said first, respectively said second pipe is provided with a first, respectively second coupling piece, which coupling pieces are provided to engage each other upon coupling of said pipes, whereby said coupling detector is provided for being mounted onto said first pipe, which coupling detector further comprises a switch for switching the coupling detector into a position which corresponds to a coupled state of said pipes.

Such compositions are used for controlling whether two pipes are coupled to each other or not, for example in process installations wherein liquids are transported through said pipes. In such process installations, several process steps, for example the pumping or transport of liquids are often controlled from a central operation room. It is therefore desirable that the central operation room receives information whether the pipes involved are coupled to each other or not.

Common used coupling systems used for coupling pipes to each other are the Cam & Groove fast coupling systems.

In the known device, the coupling detector is mostly mounted on one of the pipes beforehand, mostly on the fixed pipe. When, during the subsequent construction of a process installation, two pipes are coupled to each other, the coupling detector is manually switched on by a technician, after the connection has been effectuated. Then, a signal is sent by the coupling detector to a central control panel in the operation room, thus indicating that the pipes involved are coupled. The coupling detector remains in the on-switched state until it is manually turned off by the technician.

The known device has the disadvantage that the coupling detector must be switched on by the operator. Also, the detector should remain accessible to the technician, even after completion of the construction of the process installation.

It is the aim of the present invention to provide a device which allows to control and watch the coupling of two pipes in a simple and reliable way, whereby the switching of the coupling detector takes place independently of an action of the technician.

This is achieved according to the present invention in that upon coupling of said pipes, said switch is operable by said second coupling piece.

In such a composition, the coupling detector represents in a correct and reliable way whether or not said pipes are coupled to each other, because the switch which operates the coupling detector is operated itself by the second pipe during the effectuation of the coupling of the pipes. Therefore, according to the present invention, the instant of switching the coupling detector into the on-switched position is not influenced by external circumstances such as for example an action of the technician, a mechanical movement or an accidental touch by an object.

In a first embodiment of the invention, the switch is preferably operable by a rim of the second coupling piece.

In such a composition, the presence of the coupling detector does not affect the normal functioning of the coupling.

In a second embodiment of the invention, the switch is preferably movable in longitudinal direction of the first pipe.

Such a switch is operated by the movement involved upon coupling of the pipes.

According to a third embodiment of the invention, the coupling detector is preferably mounted adjacent to the first coupling piece.

According to a fourth embodiment of the invention, the switch comprises a spring by means of which spring the switch can be switched into a position corresponding to an uncoupled state of the pipes.

In such a composition, the coupling detector can be used and re-used several times and the pipes involved can be coupled and uncoupled several times. The switch, and consequently also the coupling detector, always correctly indicate whether the pipes are coupled to each other or not.

According to a fifth embodiment of the invention, the coupling detector comprises a ring which is movable in longitudinal direction of the first pipe, which ring is mounted around said first pipe, which ring is, on a side pointing away from said second coupling piece, provided with a first and a second level which are connected to each other by means of an inclined plane, which coupling detector also comprises a pin for switching a signal generator on or off, which pin is provided to be movable through movement of said ring, from said first level along said inclined plane, to said second level, whereby said first level corresponds to an off-switched position of the signal generator for producing a first signal corresponding to an off-switched position of the switch, and whereby said second level corresponds to an on-switched position of said signal generator for producing a second signal corresponding to an on-switched position of said switch.

The signal generator can for example be connected to a central control panel, on which panel a first signal is generated upon the coupling of the pipes and a second signal is generated upon uncoupling the pipes.

According to a sixth embodiment of the invention, the coupling detector is preferably mounted in a closed housing, whereby said switch forms part of said housing.

By building the coupling detector into a housing, the risks of damaging the detector, for example during the construction of a process installation, can be seriously reduced, the coupling detector is less sensitive to contamination and can be used in a large number of different conditions, for example corrosive conditions, without involving the risk to a damage or contamination of the coupling detector.

In the composition according to the invention, several types of signal generators can be used, for example a mechanical switch, a contact switch or a proximity switch. According to the present invention, the signal generator is preferably a proximity switch. Such proximity switches assure a long reliability in operation, they show only a poor sensitivity to wear and can easily be built into a housing.

According to the invention, in order to assure a sturdy construction, the housing is preferably mounted onto the coupling by means of welding.

The present invention also relates to a coupling detector as part of the composition described above.

Such a coupling detector comprises a switch for switching said coupling detector to a position corresponding to a coupled state of said pipes, whereby said switch upon coupling of said pipes is operable by a second coupling piece mounted on said second pipe.

According to the invention, the coupling pieces, the detector and the housing are preferably made of stainless steel.

The invention is further elucidated by means of the following example, figures and description of the figures.

In the following figures, similar reference numbers refer to similar parts.
Figure 1 shows a cross-section of two pipes in the uncoupled state and the coupling detector in rest;

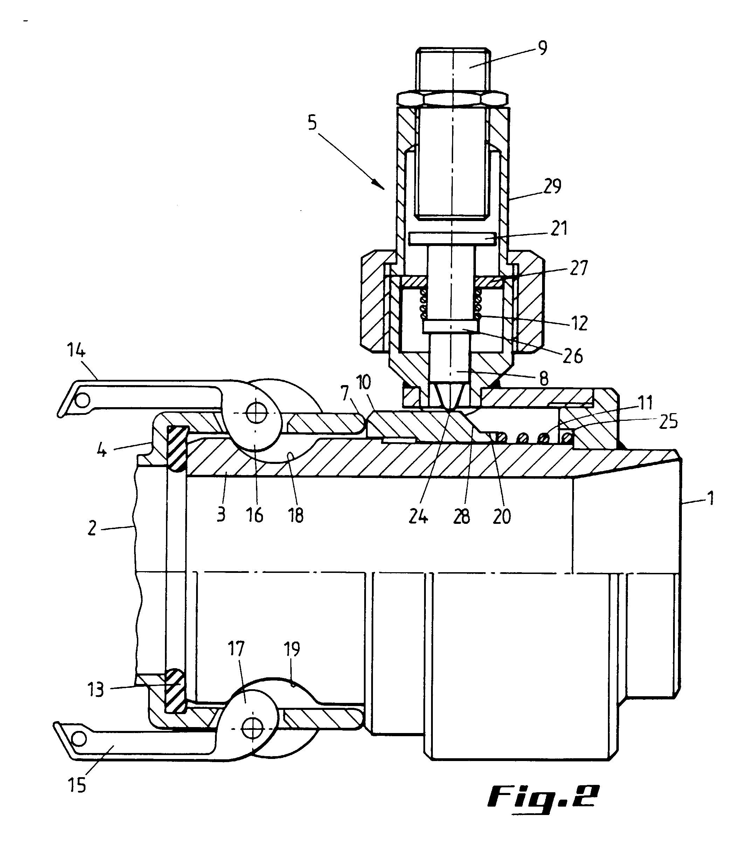

Figure 2 shows a cross-section of two coupled pipes with the coupling detector in the on-switched position.

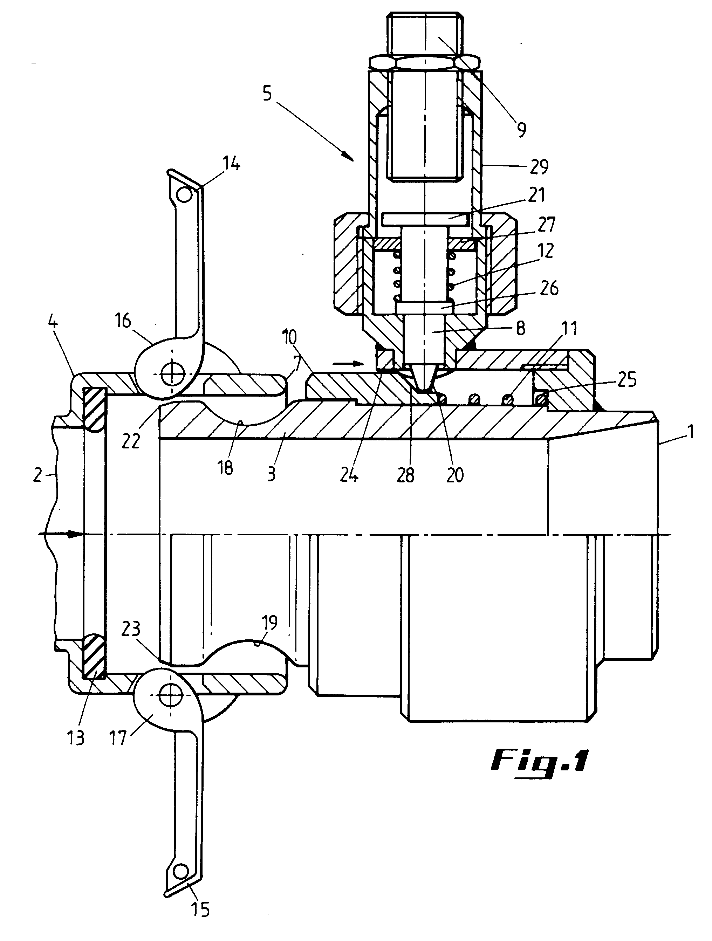

The composition shown in Figure 1, comprises a first pipe. provided with a first coupling piece 3 and a second pipe 2, provided with a second coupling piece 4. The coupling pieces 3 and 4 together constitute the coupling for coupling the pipes 1 and 2. Within the second coupling piece 4, a sealing ring 13 is provided so as to seal the coupling piece in order to prevent leaks.

The first pipe 1 is preferably a fixed pipe, the second pipe 2 is preferably a flexible pipe.

The outer periphery of the second coupling piece 4 is provided with two handles 14 and 15. The handles 14 and 15 are tiltable to and from the second pipe 2. The handles 14 and 15 comprise on their under side rounded heads 16 and 17, which fit into corresponding recesses 18 and 19 in the outer casing 6 of the first coupling piece 3.

The first coupling piece 3 has an outer casing 6, provided with springing points 22 and 23 for the rounded heads 16 and 17 of respectively the handles 14 and 15.

The coupling detector 5 for controlling and watching the coupling of pipes 1 and 2, is applied on the first coupling piece 3.

The coupling detector 5 comprises a switch 10 which is operable by the second coupling piece 4. The switch 10 is preferably built up of a ring, which is movable in the longitudinal direction of the first pipe 1, and which is mounted around the first pipe 1, whereby the ring 10 is operable by the second coupling piece 4. The switch 10 can also be the half of a ring or a part of a ring, which is clamped on the first pipe 1 or which is movable in longitudinal direction of the first pipe 1 by means of a groove in the outer casing 6 of the first coupling piece 3. In a further preferred embodiment, the ring 10 forms part of the sealed housing 29 in which the coupling detector 5 is mounted.

The coupling detector 5 further comprises a movable pin 8 which is operated by ring 10. Pin 8 is for example movable in a direction perpendicular to the axis of the first pipe 1.

The coupling detector 5 also comprises a signal generator 9 which is operable by pin 8.

Ring 10 also comprises a side pointing away form the second coupling piece 4 and which is situated in the inside of the housing 29. This side of the ring which points away from the second coupling piece 4 comprises a first level 20 and a second level 24 which are connected to each other by means of an inclined plane 28. The first and second level 20 and 24 are preferably substantially parallel to the axis of the first pipe 1, or the axis of the first coupling piece 3. In the off-switched, respectively on-switched position of the coupling detector 5, the pin 8 is situated on the first level 20, respectively second level 24.

Spring 11 is mounted around the first pipe 1 and acts upon the ring 10. One extremity of spring 11 is attached to ring 10, the other extremity is attached in a recess 25 in the housing 29 of the coupling detector 5. In case the pipes 1 and 2 are in the uncoupled state, spring 11 is in rest. In case the pipes 1 and 2 are coupled, spring 11 is compressed.

Spring 12 is mounted around pin 8. One end of spring 12 is attached to a thickened part 26 on pin 8, the other end is attached to a supporting plate 27, on pin 8. Supporting plate 27 also functions as a slide guide upon the movement of the pin 8. In the off-switched position of the switch 10, pin 8 is situated on the first level 20 and spring 12 is at rest. In the on-switched position of the switch 10, pin 8 is situated on the second level 24 and spring 12 is compressed.

Pin 8 is at its topside provided with a small plate 21 for switching the signal generator to a first and a second position. The first position corresponds to an off-switched position of the signal generator 9 for producing a first signal corresponding to the off-switched position of the switch 10. The second position corresponds to an on-switched position of the switch 10 for producing a second signal corresponding to the on-switched position of the switch 10. The proximity switch 9 is for example connected to a central control panel for controlling and watching the coupling between the pipes.

The coupling detector 5 is preferably mounted in a closed housing 29. The housing 29 is preferably welded to the first coupling piece 3.

Upon effectuating the coupling of the first pipe 1 to the second pipe 2, the first coupling piece 3 is moved until it is situated at least partially in the second coupling piece 4. The pipes 1, 2 can be moved towards each other manually or with the aid of handles 14 and 15. The rounded heads 16 and 17 are thereby pushed from the springing points 22 and 23 and moved further by the movement of the handles 14 and 15 until they rest in the corresponding recesses 18 and 19 in the outer casing 21 of the first coupling piece 3. The coupling is then effectuated by canting the handles 14 and 15 towards the pipe 2. In the coupled state, the first and second coupling pieces 3, 4 engage each other.

By bringing the second coupling piece 4 over the first coupling piece 3, ring 10 is moved by rim 7 of the second coupling piece 4 in longitudinal direction of the first pipe 1. The force on the handles 14 and 15 surmounts the force of spring 11 and spring 11 is compressed.

The movement of ring 10 is transferred to pin 8, as a consequence, pin 8 is moved along that side of ring 10 that is situated at the inner side of the housing 29 and which points away from the second coupling piece 4. Thereby, pin 8 is moved from the first level 20 of ring 10 along the inclined plane 28, to the second level 24, whereby supporting plate 27 functions as slide guide for the movement described above. Simultaneously to the movement of pin 8, spring 12 is compressed and plate 21 is moved to the proximity switch 9. Proximity switch 9 is switched on, following which a signal corresponds to a coupled state of pipes 1 and 2, is produced on the (here not shown) central control panel.

Upon uncoupling of the pipes 1 and 2, handles 14 and 15 are moved away form the second coupling piece 4. Second pipe 2 and second coupling piece 4 are moved in rearward direction, spring 11 is released and forces ring 10 to move in the direction opposite to the arrow shown in figure 1. The movement of the ring 10 is transferred to pin 8. Spring 12 is released and forces pin 8 to move from the second level 24 along inclined plane 28 to first level 20. Proximity switch 9 switches off. On the central control panel, a signal corresponding to an uncoupled state of the pipes 1 and 2 is produced.

### List of references.

1. first pipe (fixed pipe)
2. second pipe (flexible pipe)
3. first coupling piece
4. second coupling piece
5. coupling detector
6. outer casing of first coupling piece
7. rim of second coupling piece
8. moveable pin
9. signal generator
10. switch
11. spring
12. spring
13. sealing ring
14. handle
15. handle
16. rounded head
17. rounded head
18. recess
19. recess
20. first level
21. plate
22. springing point
23. springing point
24. second level
25. recess
26. thickened part
27. supporting plate
28. inclined plane
29. closed housing

## Claims

1. Composition comprising a first pipe (1), a second pipe (2) and a coupling detector (5), whereby said first (1), respectively said second (2) pipe is provided with a first (3), respectively second coupling piece (4), which coupling pieces are provided to engage each other upon coupling of said pipes, whereby said coupling detector (5) is provided for mounting onto said first pipe (1), said coupling detector further comprising a switch (10) for switching the coupling detector (5) into a position which corresponds to a coupled state of said pipes (1, 2), characterised in that upon coupling of said pipes (1, 2) said switch (10) is operable by said second coupling piece (4).

2. Composition according to claim 1, characterised in that said switch (10) is operable by a rim (7) of said second coupling piece (4).

3. Composition according to claim 1 or 2, characterised in that said switch (10) is movable in longitudinal direction of said first pipe (1).

4. Composition according to any one of claims 1 to 3, characterised in that said coupling detector (5) is mounted adjacent to said first coupling piece (3).

5. Composition according to any one of claims 1 to 4, characterised in that said switch (10) comprises a spring (11), for switching said switch to a position corresponding to an uncoupled state of said pipes (1, 2).

6. Composition according to any one of claims 1 to 5, characterised in that said coupling detector (5) comprises a ring (10) which is movable in longitudinal direction of said first pipe (1), which ring is mounted around said first pipe, which ring (10) is, on a side that points away from said second coupling piece (4), provided with a first level (20) and a second level (24), which first (20) and second level (24) are connected to each other by means of an inclined plane (28), which coupling detector (5) also comprises a pin (8) for switching a signal generator (9) on and off, which pin (8) is provided so as to be movable through movement of said ring (10) from said first level (20) along said inclined plane (28), to said second level (24), whereby said first level (20) corresponds to an off-switched position of the signal generator (9) for producing a first signal corresponding to an off-switched position of the switch (10), and whereby said second level (24) corresponds to an on-switched position of said signal generator (9) for producing a second signal corresponding to an on-switched position of said switch (10).

7. Composition according to any one of claims 1 to 6, characterised in that said coupling detector (5) is mounted in a closed housing (29), whereby said switch forms part of said housing (29).

8. Composition according to any one of claims 1 to 7, characterised in that said signal generator is a proximity switch (9).

9. Coupling detector as part of a composition according to any one of claims 1 to 8, characterised in that said coupling detector (5) comprises a switch (10) for switching said coupling detector (5) to a position corresponding to a coupled state of said pipes (1, 2), whereby said switch (10) upon coupling of said pipes (1, 2) is operable by a second coupling piece (4) mounted on said second pipe (2).
